# EUROPÄISCHE PATENTANMELDUNG

(11) **EP 3 006 200 A1**
(43) Veröffentlichungstag der Anmeldung: **13.04.2016**
(21) Anmeldenummer: 15188823.7
(22) Anmeldetag: 07.10.2015
(51) Int. Cl.: B32B 7/12, B32B 21/02, B32B 21/06, B32B 21/08, E04C 2/16, B32B 21/04

(54) **SPERRHOLZPLATTE**

(30) Priorität: 08.10.2014 DE 202014104827 U
(71) Anmelder: SWL-Tischlerplatten Betriebs-GmbH, 33449 Langenberg (DE)
(72) Erfinder: Schonlau, Bernd, 59555 Lippstadt (DE)
(74) Vertreter: Manske, Jörg

(57) **Zusammenfassung**

Die vorliegende Erfindung betrifft eine Sperrholzplatte (1), umfassend eine Sperrholz-Mittellage (2) und zwei Absperrschichten (3, 4), die beidseitig quer zur Sperrholz-Mittellage (2) auf die Sperrholz-Mittellage (2) aufgeleimt sind, wobei zumindest eine der beiden Absperrschichten (3, 4) an einer Außenseite eine Melaminharzbeschichtung (6, 7) aufweist, wobei zumindest diejenige Absperrschicht (3, 4), welche die Melaminharzbeschichtung (6, 7) aufweist, durch eine Faserplatte gebildet ist, die eine Rohdichte zwischen 750 und 1050 kg/m³ aufweist.

## Beschreibung

Die vorliegende Erfindung betrifft eine Sperrholzplatte, umfassend eine Sperrholz-Mittellage und zwei Absperrschichten, die beidseitig quer zur Sperrholz-Mittellage auf die Sperrholz-Mittellage aufgeleimt sind, wobei mindestens eine der Absperrschichten an einer Außenseite eine Melaminharzbeschichtung aufweist.

Sperrholzplatten sind aus dem Stand der Technik in unterschiedlichen Ausführungen bekannt. Sie zeichnen sich insbesondere dadurch aus, dass sie im Vergleich zu anderen Werkstoffen aus Holz eine relativ geringe Masse aufweisen und selbst unter wechselnden klimatischen Bedingungen sehr formstabil und biegesteif sind. Ihre Einsatzmöglichkeiten sind daher sehr vielfältig. Dieses trifft insbesondere auf so genannte Tischlerplatten zu, bei denen die Sperrholz-Mittellage aus einer Mehrzahl parallel zueinander ausgerichteter Holzstäbe oder Holzstäbchen, die miteinander verleimt sind, gebildet ist. Quer zur Sperrholz-Mittellage sind beidseitig zwei Absperrschichten aufgeleimt. Zumindest eine der Absperrschichten kann eine Melaminharzbeschichtung aufweisen, um das gewünschte optische Erscheinungsbild der Sperrholzplatte zu erhalten. Im Stand der Technik werden die Absperrschichten bislang durch relativ dünne Spanplatten gebildet, die mit der Melaminharzbeschichtung versehen werden.

Bislang galt in Fachkreisen die Melaminharzbeschichtung von Sperrholzplatten mit Absperrschichten, die als Faserplatten ausgebildet sind, als problematisch. Dieses lag insbesondere an der Beschaffenheit der Faserplatten und der Melaminharzbeschichtungen sowie an der Qualität der Sperrholz-Mittellage. Bei entsprechenden Versuchen mit Absperrschichten, die als Faserplatten ausgebildet waren, kam es häufig zu unerwünschten Blasenbildungen, Abplatzungen der Faserplatten oder zu Welligkeiten in den melaminharzbeschichteten Oberflächen der Sperrholzplatte. Daher wurden in der Vergangenheit die Absperrschichten stets aus den oben bereits erwähnten, vergleichsweise dünn ausgebildeten Spanplatten hergestellt, da diese sich aufgrund Ihrer technischen Eigenschaften besser beschichten ließen, so dass die vorstehend genannten Probleme minimiert werden konnten oder gar nicht erst auftraten. Diese dünnen Spanplatten, die bei den aus dem Stand der Technik bekannten Sperrholzplatten die Absperrschichten bilden, auf denen die Melaminharzbeschichtungen aufgebracht sind, weisen allerdings relativ geringe Festigkeiten auf.

Die vorliegende Erfindung macht es sich zur Aufgabe, eine Sperrholzplatte der eingangs genannten Art zur Verfügung zu stellen, bei der die mindesten eine melaminharzbeschichtete Absperrschicht verbesserte Festigkeitseigenschaften besitzt.

Diese Aufgabe wird durch eine Sperrholzplatte der eingangs genannten Art mit den Merkmalen des kennzeichnenden Teils des Anspruchs 1 gelöst. Die Unteransprüche betreffen vorteilhafte Weiterbildungen der Erfindung.

Eine erfindungsgemäße Sperrholzplatte zeichnet sich dadurch aus, dass zumindest diejenige Absperrschicht, welche die Melaminharzbeschichtung aufweist, durch eine Faserplatte gebildet ist, die eine Rohdichte zwischen 750 und 1050 kg/m³ aufweist. Überraschend hat es sich gezeigt, dass auf eine Faserplatte mit einer Rohdichte in dem erfindungsgemäß vorgesehenen Bereich zwischen 750 und 1050 kg/m³ eine Melaminharzbeschichtung mit hoher Qualität prozesssicher aufgebracht werden kann. Es konnte festgestellt werden, dass durch die Verwendung einer Faserplatte mit einer Rohdichte zwischen 750 und 1050 kg/m³ unerwünschte Blasenbildungen, Abplatzungen der Faserplatte oder Welligkeiten in der durch die Melaminharzbeschichtung gebildeten Oberfläche der Sperrholzplatte vermieden werden können. Dadurch, dass die Absperrschicht als Faserplatte ausgeführt ist, ergeben sich zudem in vorteilhafter Weise verbesserte Festigkeitseigenschaften nicht nur der Absperrschicht, sondern auch der gesamten Sperrholzplatte. Die Sperrholz-Mittellage umfasst eine Mehrzahl parallel zueinander ausgerichteter Holzstäbe oder Holzstäbchen, die miteinander verleimt sind. Auf diese Weise wird ein stabiler Sperrholz-Mittellagenverbund zur Verfügung gestellt. Die Holzstäbe beziehungsweise Holzstäbchen können aus Nadel- oder Laubhölzern, vorzugsweise aus Fichtenholz, Kiefernholz, Pappelholz, Tannenholz oder aus Überseehölzern (Fromager, Albasia, Paulownia, Okoume, Gabun, Fuma, Balsa etc.), hergestellt sein. Die Holzstäbe der Sperrholz-Mittellage weisen typischerweise eine Breite von etwa 20 mm bis etwa 50 mm auf. Wenn die Sperrholz-Mittellage alternativ aus Holzstäbchen besteht, werden diese aus Schälfurnierstreifen gebildet, die vorzugsweise eine Dicke von etwa 1,5 mm bis etwa 8 mm, insbesondere eine Dicke von etwa 1,5 mm bis etwa 6,5 mm, haben. Besonders vorteilhaft ist es, wenn die Schälfurnierstreifen eine maximale Dicke von etwa 3 mm haben. Mehrere Lagen dieser Schälfurnierstreifen können bei der Herstellung miteinander zu Platten verleimt werden. Diese Platten werden danach orthogonal zur Richtung der Schälfurnierlagen in der gewünschten Dicke der Sperrholz-Mittellage aufgetrennt. Auf diese Weise werden Teilblöcke aus den Platten erhalten, die zur Bildung der Sperrholz-Mittellage der Sperrholzplatte miteinander verleimt werden.

In einer bevorzugten Ausführungsform wird vorgeschlagen, dass die Faserplatte eine Feuchtigkeit zwischen 3% und 8% besitzt. Aufgrund der relativ geringen Feuchtigkeit der Faserplatte können verbesserte Eigenschaften der Melaminharzbeschichtung erreicht werden.

In einer besonders bevorzugten Ausführungsform kann vorgesehen sein, dass die Melaminharzbeschichtung eine Feuchtigkeit zwischen 5% und 8% besitzt. Diese geringe Feuchtigkeit wirkt sich ebenfalls positiv auf die Eigenschaften der Melaminharzbeschichtung aus.

Vorzugsweise kann die Faserplatte eine Plattenstärke zwischen 2 mm und 6 mm haben. Es hat sich gezeigt, dass trotz der geringen Plattenstärke eine formstabile Absperrschicht geschaffen werden kann.

In einer vorteilhaften Weiterbildung ist vorgesehen, dass jede der beiden Absperrschichten eine Melaminharzbeschichtung aufweist. Dadurch wird ein optisch einheitliches Erscheinungsbild der Ober- und Unterseite der Sperrholzplatte geschaffen.

In diesem Zusammenhang hat es sich als besonders zweckmäßig erwiesen, dass jede der beiden Absperrschichten durch eine Faserplatte gebildet ist, die eine Rohdichte zwischen 750 und 1050 kg/m³ aufweist. Wie oben bereits erwähnt, können auf Faserplatten mit einer Rohdichte in einem Bereich zwischen 750 und 1050 kg/m³ Melaminharzbeschichtungen prozesssicher und mit hoher Qualität aufgebracht werden. Insbesondere können unerwünschte Blasenbildungen, Abplatzungen der Faserplatten oder Welligkeiten in den durch die Melaminharzbeschichtungen gebildeten Oberflächen der Sperrholzplatte in vorteilhafter Weise vermieden werden.

Vorzugsweise können die Faserplatten eine Feuchtigkeit zwischen 3% und 8% aufweisen. Auf diese Weise lassen sich weiter verbesserte Eigenschaften der Melaminharzbeschichtungen erreichen.

Als besonders zweckmäßig hat es sich erwiesen, dass die Melaminharzbeschichtungen eine Feuchtigkeit zwischen 5% und 8% haben. Diese geringe Feuchtigkeit wirkt sich ebenfalls positiv auf die Eigenschaften und die Qualität der Melaminharzbeschichtung aus.

Vorzugsweise können die Faserplatten eine Plattenstärke zwischen 2 mm und 6 mm haben. Durch diese Maßnahme werden relativ dünne, aber dennoch formstabile Absperrschichten geschaffen.

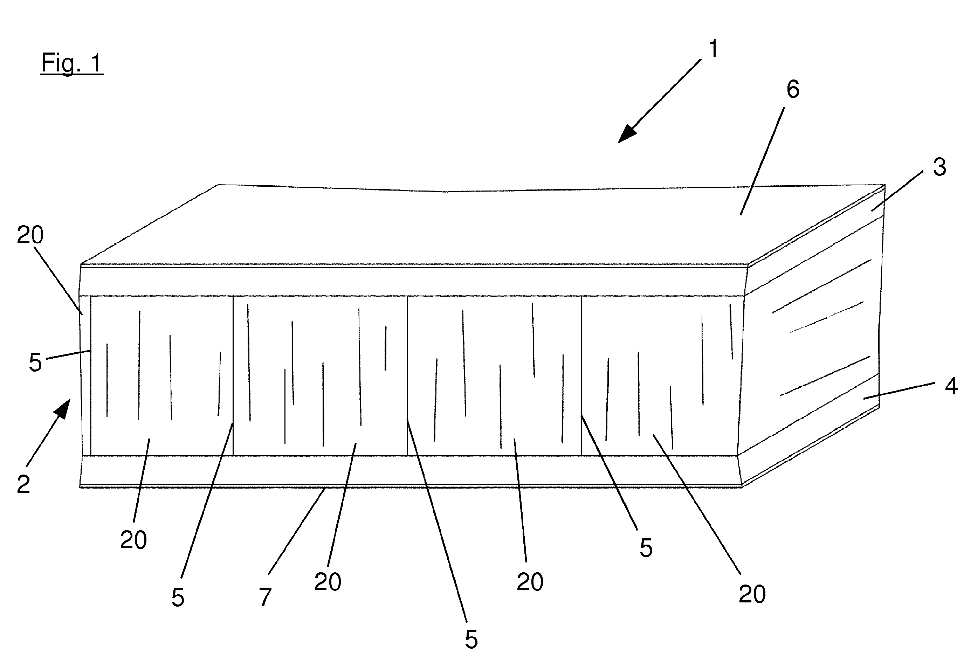

In einer bevorzugten Ausführungsform wird vorgeschlagen, dass die Sperrholz-Mittellage eine Stärke zwischen 5 mm und 60 mm aufweist. Weitere Merkmale und Vorteile der vorliegenden Erfindung werden deutlich anhand der nachfolgenden Beschreibung eines bevorzugten Ausführungsbeispiels unter Bezugnahme auf die beiliegende Abbildung. Darin zeigt
- Fig. 1: eine perspektivische Ansicht eines Teils einer Sperrholzplatte, die gemäß einem bevorzugten Ausführungsbeispiel der vorliegenden Erfindung ausgeführt ist.

Unter Bezugnahme auf Fig. 1 weist eine Sperrholzplatte 1, die gemäß einem bevorzugten Ausführungsbeispiel der vorliegenden Erfindung ausgeführt ist, eine Sperrholz-Mittellage 2 auf. Die Sperrholz-Mittellage 2 umfasst vorliegend eine Mehrzahl parallel zueinander ausgerichteter Holzstäbe 20. Gemäß einer alternativen Ausführungsform kann die Sperrholz-Mittellage 2 auch aus Holzstäbchen hergestellt sein.

Benachbarte Holzstäbe 20 sind paarweise miteinander verleimt, so dass zwischen diesen jeweils eine Leimfuge 5 ausgebildet ist. Auf diese Weise wird ein stabiler Sperrholz-Mittellagenverbund zur Verfügung gestellt. Die Holzstäbe 20 der Sperrholz-Mittellage 2 weisen typischerweise eine Breite von etwa 20 mm bis etwa 50 mm auf. Die Holzstäbe 20 beziehungsweise Holzstäbchen können aus Nadel- oder Laubhölzern, vorzugsweise aus Fichtenholz, Kiefernholz, Pappelholz, Tannenholz oder aus Überseehölzern (Fromager, Albasia, Paulownia, Okoume, Gabun, Fuma, Balsa etc.), hergestellt sein. Vorzugsweise weist die Sperrholz-Mittellage 2 eine Stärke (Dicke) zwischen 5 mm und 60 mm auf. Es ist möglich, zur Herstellung der Sperrholz-Mittellage 2 entsprechende Holzstäbe 20 beziehungsweise Holzstäbchen mit unterschiedlichen Rohdichten zu verwenden. Darüber hinaus umfasst die Sperrholzplatte 1 eine erste Absperrschicht 3 und eine zweite Absperrschicht 4, die auf den beiden gegenüberliegenden Seiten (d.h. der Ober- und Unterseite) der Sperrholz-Mittellage 2 vorgesehen sind und sich in deren Querrichtung erstrecken. Die beiden Absperrschichten 3, 4 sind mit der Ober- beziehungsweise Unterseite der Sperrholzmittellage 2 verleimt.

Die beiden Absperrschichten 3, 4 weisen vorzugsweise eine Stärke (Schichtdicke) zwischen 2 mm und 6 mm auf sind als Faserplatten ausgebildet, die eine Rohdichte zwischen 750 und 1050 kg/m³ aufweisen. Die Faserplatten können im Nassverfahren oder alternativ auch im Trockenverfahren hergestellt sein. Die Wahl der Rohdichte hat einen unmittelbaren Einfluss auf die Festigkeit der als Faserplatten ausgebildeten Absperrschichten 3, 4, die sich ebenfalls auf die Festigkeit der gesamten Sperrholzplatte 1 auswirkt. Generell zeigt es sich, dass die Querzugfestigkeit der Faserplatten zunimmt, je größer deren Rohdichte ist. Eine hohe Querzugfestigkeit kann in vorteilhafter Weise unerwünschte Abplatzungen der Faserplatten verhindern.

Jede der beiden Absperrschichten 3, 4 weist an ihrer Außenseite eine Melaminharzbeschichtung 6, 7 auf, um der Sperrholzplatte 1 ein optisch stimmiges Erscheinungsbild zu verleihen. Vorzugsweise weisen die Faserplatten eine geringe Feuchtigkeit auf, die insbesondere zwischen 3% und 8% liegt. Die Melaminharzbeschichtungen 6, 7 haben vorzugsweise eine Feuchtigkeit zwischen 5% und 8%. Überraschend hat es sich gezeigt, dass die aus den Faserplatten bestehenden Absperrschichten 3, 4 mit den vorstehend genannten Eigenschaften im Hinblick auf ihre Rohdichte und ihre Feuchtigkeit den physikalischen und chemischen Ansprüchen eines Beschichtungsprozesses mit Melaminharz gerecht werden. Die technische Innovation besteht insbesondere aus der richtigen Auswahl der Faserplatten, aus denen die Absperrschichten 3, 4 hergestellt werden, hinsichtlich ihrer Rohdichte und Feuchtigkeit, sowie der richtigen Beschaffenheit der Melaminharzbeschichtungen 6, 7 hinsichtlich ihrer Feuchtigkeit.

Ein Vorteil der hier beschriebenen Sperrholzplatte 1 besteht darin, dass die bislang bei entsprechenden Versuchen mit Faserplatten-Absperrschichten auftretenden Blasenbildungen, Abplatzungen der Faserplatten oder Welligkeiten in den Melaminharzbeschichtungen 6, 7 vermieden werden können. Ein weiterer Vorteil besteht darin, dass die Faserplatten eine höherer Festigkeit aufweisen als dünne Spanplatten, die bei den aus dem Stand der Technik bekannten Sperrholzplatten 1 die melaminharzbeschichteten Absperrschichten 3, 4 bilden.

## Patentansprüche

1. Sperrholzplatte (1), umfassend eine Sperrholz-Mittellage (2) und zwei Absperrschichten (3, 4), die beidseitig quer zur Sperrholz-Mittellage (2) auf die Sperrholz-Mittellage (2) aufgeleimt sind, wobei zumindest eine der beiden Absperrschichten (3, 4) an einer Außenseite eine Melaminharzbeschichtung (6, 7) aufweist, **dadurch gekennzeichnet, dass** zumindest diejenige Absperrschicht (3, 4), welche die Melaminharzbeschichtung (6, 7) aufweist, durch eine Faserplatte gebildet ist, die eine Rohdichte zwischen 750 und 1050 kg/m³ aufweist.

2. Sperrholzplatte (1) nach Anspruch 1, **dadurch gekennzeichnet, dass** die Faserplatte eine Feuchtigkeit zwischen 3% und 8% besitzt.

3. Sperrholzplatte (1) nach Anspruch 1 oder 2, **dadurch gekennzeichnet, dass** die Melaminharzbeschichtung (6, 7) eine Feuchtigkeit zwischen 5% und 8% besitzt.

4. Sperrholzplatte (1) nach einem der Ansprüche 1 bis 3, **dadurch gekennzeichnet, dass** die Faserplatte eine Plattenstärke zwischen 2 mm und 6 mm hat.

5. Sperrholzplatte (1) nach Anspruch 1, **dadurch gekennzeichnet, dass** jede der beiden Absperrschichten (3, 4) eine Melaminharzbeschichtung (6, 7) aufweist.

6. Sperrholzplatte (1) nach Anspruch 5, **dadurch gekennzeichnet, dass** jede der beiden Absperrschichten (3, 4) durch eine Faserplatte gebildet ist, die eine Rohdichte zwischen 750 und 1050 kg/m³ aufweist.

7. Sperrholzplatte (1) nach einem der Ansprüche 5 oder 6, **dadurch gekennzeichnet, dass** die Faserplatten eine Feuchtigkeit zwischen 3% und 8% aufweisen.

8. Sperrholzplatte (1) nach einem der Ansprüche 5 bis 7, **dadurch gekennzeichnet, dass** die Melaminharzbeschichtungen (6, 7) eine Feuchtigkeit zwischen 5% und 8% haben.

9. Sperrholzplatte (1) nach einem der Ansprüche 5 bis 8, **dadurch gekennzeichnet, dass** die Faserplatten eine Plattenstärke zwischen 2 mm und 6 mm haben.

10. Sperrholzplatte (1) nach einem der Ansprüche 1 bis 9, **dadurch gekennzeichnet, dass** die Sperrholz-Mittellage (2) eine Stärke zwischen 5 mm und 60 mm aufweist.
